# EUROPEAN PATENT APPLICATION

(11) **EP 4 421 693 A1**
(43) Date of publication of application: **28.08.2024**
(21) Application number: 23382180.0
(22) Date of filing: 27.02.2023
(51) Int. Cl.: G06N 20/00

(54) **TRAINING A COMPUTING MODULE IMPLEMENTING A MACHINE LEARNING MODEL**

(71) Applicant: Qbeast Analytics, 08020 Barcelona (ES)
(72) Inventor: GALAN, José Juan, 41730 SEVILLA (ES); CUGNASCO, Cesare, 08011 BARCELONA (ES)
(74) Representative: ZBM Patents - Zea, Barlocci & Markvardsen

(57) **Abstract**

Methods are provided of training a computing module implementing a Machine Learning (ML) model, said methods comprising designating a main computing-node, and performing an iteration loop until an ending condition is satisfied, each of the iterations including: training the computing-module with ML model update using coordinates of a first selection of data-elements in the main computing-node; designating as candidates those computing-nodes parent-child related with the main computing-node based on a candidate-designation policy; calculating, for each of the candidate computing-nodes, a gradient denoting a measure of loss of the ML model using coordinates of a second selection of data-elements in the candidate; and designating as main computing-node one of the candidates depending on the gradients previously calculated, so as to initiate next iteration with said new main computing-node. Training systems and computer programs suitable for performing such training methods are also provided.

## Description

The present disclosure relates to methods of training a computing module implementing a Machine Learning model, and to systems and computer programs suitable for performing said methods.

### BACKGROUND

Nowadays, in the era of big data, the continuous increase in data size keeps challenging the design of algorithms to train computing modules implementing a Machine Learning (ML) model. While there have been many efforts to design and implement scalable algorithms that may handle large-scale data sets directly, many traditional algorithms are not yet as efficient as would be desirable. It is thus currently demanded to discover or conceive new manners of training computing modules implementing a ML model more efficiently.

An object of this disclosure is to provide new methods, systems and computer programs aimed at improving prior art manners of training a computing module implementing a Machine Learning model.

### SUMMARY

In an aspect, methods are provided of training a computing module implementing a Machine Learning (ML) model, said training based on a computer-based multi-dimensional tree-structure comprising a plurality of computing-nodes including a root computing-node, a plurality of non-root computing-nodes and parent-child relations between the computing-nodes. The root computing-node covers a multi-dimensional space having a plurality of dimensions. Each of the non-root computing-nodes covers a part of the multi-dimensional space in such a way that each of the non-root computing-nodes with same parent computing-node covers a partition of whole or part of the multi-dimensional space covered by said parent computing-node. Each of the computing-nodes stores data-elements each having a coordinate for each of the dimensions defining where the data-element is located within the whole or part of the multi-dimensional space covered by the computing-node in which the data-element is stored.

Such methods (also denominated training methods herein) comprise selecting one of the computing-nodes as starting point and initially designating it as main computing-node, and performing an iteration loop until an ending condition is satisfied. Each of the iterations of the iterative loop includes a training function, a candidate designation function, a gradient function, and a main designation function. The training function includes training the computing module with update of the ML model (also denominated updatable training herein) using the coordinates of a first selection of data-elements stored in the main computing-node in current iteration (of the iteration loop). The candidate designation function includes designating candidate computing-nodes based on a candidate-designation policy, said policy including designating as candidates those computing-nodes parent-child related (or having parent-child relation) with the main computing-node in current iteration (of the iteration loop). The gradient function includes calculating (or estimating), for each of the computing-nodes previously designated as candidates in current iteration (of the iteration loop), a gradient denoting a measure of loss of the ML model using (or depending on) the coordinates of a second selection of data-elements in the candidate. The main designation function includes designating as main computing-node one of the candidate computing-nodes depending on the gradients previously calculated (or estimated) in current iteration (of the iteration loop), so as to initiate next iteration (of the iteration loop) with said newly designated main computing-node.

A computing-node may be defined as a node in the (computer-based multi-dimensional) tree-structure that is implemented in/at/by a computing system, in such a manner that said node includes processing or computing functionalities to at least store data-elements and access them. Data access functionalities may thus be provided at the computing-node such as, e.g., data reading, data deletion, data writing, data updating, data insertion, etc. performable on/to the data-elements stored or to be stored in the computing-node. A computing-node may thus be the computing system itself (in/at/by which the computing-node is implemented), or may be part of it, or may reside in/at it, or may be hosted in/at it, etc. whenever the computing-node provides at least the aforementioned computational functionalities. Each of the coordinates of a data-element may correspond to a value or values in pertinent dimension of a key or unique identifier or any attribute or combination of attributes of the data-element, in such a manner that all or part of the coordinates of the data-element locates (or characterizes or identifies) the data-element within the multi-dimensional space.

Training methods proposed herein are based on an innovative exploration of a computer-based multi-dimensional tree-structure (of the aforementioned type) depending on a gradient-based selective estimation of potential improvement of the ML model depending on whether it is to be trained with data-elements in one or another computing-node, i.e., in certain or limited number of computing-nodes. It is understood herein that improvement of the ML model is inversely proportional to its loss, i.e., the lower the loss, the higher the improvement of the ML model. The loss of the ML model refers to whether the ML model is converging to or diverging from target learning state. The higher the convergence the lower the loss, and vice versa. The higher the divergence the higher the loss, and vice versa. The gradient or magnitude (or module or norm) of the gradient may be calculated (or estimated) to reflect or indicate such a convergence or divergence.

Gradient calculation or estimation in/at/for a candidate computing node may refer to perform a training simulation of the ML model using a sample (i.e. second selection) of data-elements in the candidate with no update of the model. By doing so, it may be estimated which one of the candidates will improve the model the most or, in other words, which candidate contains data-elements that will bring the model closest to target learning state. Then, this best candidate may be designated as new main computing-node to be processed in next iteration of the iteration loop. This best candidate may be the candidate computing-node for which the gradient denoting highest loss of the ML model has been previously calculated in current iteration. This selection of best candidate with estimated highest loss (or highest gradient) is based on considering that training the ML model with data-elements in said best candidate, the ML model has the potential to change most or more and thus achieve lowest or lower loss in subsequent iterations.

Experiments carried out by the inventors have surprisingly revealed that convergence of the ML model to target (or desired) learning state may be achieved using (much) less training data and, therefore, more efficiently with the proposed innovative manner of selecting training data based on the suggested synergetic gradient-based tree exploration. Since gradient-based techniques are known in the technical context of training a computing module implementing a ML model, as well as their implementation, no specific details about this are provided in present disclosure. Any known manner of gradient calculation may be used in training methods according to present disclosure.

According to examples, training methods may comprise performing a gradient descent algorithm including the calculation of the gradient (in selective manner) depending on the candidate-designation policy. The gradient descent (GD) algorithm may be performed in such a manner that the gradient is calculated only for or at those computing-nodes that have been previously designated as candidates in current iteration (of the iteration loop) according to the candidate-designation policy. In particular examples, the gradient descent algorithm may be a stochastic gradient descent (SGD) algorithm. Additionally or alternatively, other GD variants such as ADAM, Adagrad, Adadelta, RMSprop, momentum methods, Nadam, etc. may be used.

GD may be defined as an optimization algorithm that may be used to train a computing module implementing a ML model to find a minimum (or maximum) of a loss function. The loss function measures how well the ML model is performing or converging to target or desired learning state, and the gradient (or magnitude or module or norm thereof) is an indicator of whether said target or desired learning state is getting more or less close or far and, depending on this, GD may cause proper adjustment of ML model's parameters. SGD is a variant of the gradient descent characterized by sampling (instead of using whole) training data to calculate the gradient. Since GD and SGD approaches are already known, as well as their implementation, no details about them are provided herein. Any known manner of implementing GD and SGD may be used in training methods according to present disclosure.

In examples, the designation as main computing-node of one of the candidate computing-nodes depending on the gradients previously calculated (in current iteration) may include designating as main computing-node the candidate computing-node for which the (norm or module of the) gradient is the highest one among all the gradients calculated (or estimated) for computing-nodes previously designated as candidates in current iteration. Alternatively, other selection rules may be used to designate main computing-node such as, e.g., candidate selection based on probability proportional to candidate's calculated (norm or module of the) gradient, and/or candidate selection based on probability proportional to candidate's calculated (norm or module of the) gradient and inversely proportional to times that candidate has been visited, etc. It is understood herein that a visit to a candidate computing-node (in the computer-based multi-dimensional tree-structure) refers to an access to said candidate to obtain second selection of data-elements for gradient calculation (or estimation) aimed at designating main computing-node for next iteration.

In some cases, each of the iterations of the iteration loop may further comprise updating the ML model depending on (or with or according to) all or part of the gradients previously calculated (or estimated) for each of the computing-nodes that have been designated before as candidates in current iteration. In approaches considering part of the previously calculated gradients, only a predefined number of best or highest gradients may be used to update the ML model.

In some implementations, the ending (or terminating or stopping) condition may be satisfied when a loss of the ML model resulting from the training with update of the ML model performed so far (i.e. throughout all performed iterations) is below a predefined loss threshold. Additionally or alternatively, the ending condition may be satisfied when a user request to end the process is detected, or leaf tree-level is reached, or predefined maximum number of iterations is reached, or predefined maximum processing time is reached, etc.

In training methods according to configurations, the selecting of one of the computing-nodes as starting point may include selecting the root computing-node as starting point.

In examples, each of the computing-nodes may store a representative sample of the data-elements within the whole or part of the multi-dimensional space covered by the computing-node.

In some cases, the first selection of data-elements may be a random selection of data-elements stored in the main computing-node. Random selection may be arbitrary, for example, a selection of a prescribed or predefined number of data-elements uniformly at random from all or entirety of data-elements stored in the main computing-node. Additionally or alternatively, the first selection of data-elements may be a selection of a first predefined percentage of data-elements stored in the main computing-node. In particular examples, the first selection of data-elements may be a selection of all the data-elements stored in the main computing-node, i.e., the first predefined percentage may be equal to 100%.

In some implementations, the second selection of data-elements may be a random selection of data-elements stored in the candidate computing-node. Additionally or alternatively, the second selection of data-elements may be a selection of a second predefined percentage of data-elements stored in the candidate computing-node. In particular examples, the second selection of data-elements may be a selection of less than 50% of the data-elements stored in the main computing-node, preferably less than 30%, and more preferably less than 10%.

The candidate-designation policy may include, in examples, designating as candidates computing-nodes that are children of the main computing-node in current iteration (of the iteration loop). In particular, all the computing-nodes that are children of the main computing-node or only part of them may be designated as candidates. Such a selection of not all the children nodes may be randomly performed. Candidate-designation policy may be, additionally or alternatively, restricted to a predefined maximum number of designated candidates (in current iteration or so far throughout all performed iterations). Computational cost of the method may thus be kept under control by properly adjusting said predefined maximum number of designated candidates.

Additionally or alternatively to above candidate designation approaches, the candidate-designation policy may include further designating as candidates those computing-nodes that have been previously designated as candidates in previous iteration or iterations (of the iteration loop) and/or those computing-nodes that have been previously designated as main computing-nodes in previous iteration or iterations (of the iteration loop). Additionally or alternatively, the candidate-designation policy may be restricted to designate as candidates only computing-nodes at one tree-level above or at one tree-level below or at same tree-level of the main computing-node. It is known that, in a tree-structure such as the computer-based multi-dimensional tree-structure(s) proposed herein, each of the (computing-)nodes forming the tree-structure is located at (or has) a tree-level in the (computer-based multi-dimensional) tree-structure.

It is known that any tree structure, such as the ones disclosed herein, has tree-levels from root tree-level to leaf tree-level with intermediate tree-levels between root and leaf tree-levels. Root computing-node is at root tree-level and computing-nodes without any children computing-node are leaf computing-nodes. Any of the computing-nodes having parent computing-node is a child computing-node of its parent, the child being at one tree-level below with respect to its parent and the parent being at one tree-level above with respect to its child.

Training methods may further include verifying whether a predefined maximum number of (optionally different) data-elements have been selected so far (i.e. throughout all performed iterations) for gradient calculation and/or training of the ML model and, in said case, random selection of data-elements may be subsequently performed among all said previously selected data-elements to train the ML model. This manner, computational cost of the method may be effectively kept under control while convergence of the ML model to target learning state may be acceptably preserved.

In a further aspect, systems are provided for training a computing module implementing a Machine Learning model. Such systems (also denominated training systems herein) comprise a selection module and a loop module. The loop module comprises a training sub-module, a candidate designation sub-module a gradient sub-module and a main designation sub-module. The training performed or performable by training systems are based on same or similar computer-based multi-dimensional tree-structure(s) as the one(s) described with respect to training methods. The selection module is configured to select one of the computing-nodes (in the computer-based multi-dimensional tree-structure) as starting point and initially designating it as main computing-node. The loop module is configured to perform an iteration loop until an ending condition is satisfied. Each of the iterations of the iteration loop is performed or performable by the (aforementioned) sub-modules included in the loop module.

The training sub-module is configured to train the computing module with update of the ML model using the coordinates of a first selection of data-elements stored in the main computing-node in current iteration. The candidate designation sub-module is configured to designate candidate computing-nodes based on a candidate-designation policy, said policy including designating as candidates those computing-nodes parent-child related with the main computing-node in current iteration. The gradient sub-module is configured to calculate, for each of the computing-nodes previously designated as candidates in current iteration, a gradient denoting a measure of loss of the ML model using (or depending on) the coordinates of a second selection of data-elements in the candidate. The main designation sub-module is configured to designate as main computing-node one of the candidate computing-nodes depending on the gradients (or gradient magnitudes or modules or norms) previously calculated in current iteration, so as to initiate next iteration with said newly designated main computing-node. Sub-module is defined herein as a part of a module implementing a function, wherein the sub-module implements part of said function, i.e. a sub-function of the function.

Training systems are suitable or configured to perform training methods proposed herein, so same or similar functional principles and advantages as the ones described with reference to training methods may be attributed to such training systems.

In a still further aspect, computer programs are provided comprising program instructions for causing a system or computing system to perform methods of training a computing module implementing a Machine Learning model, such as those described in other parts of the disclosure. These computer programs (also denominated training computer programs herein) may be embodied on a storage medium and/or carried on a carrier signal. Training computer programs are suitable or configured to perform training methods proposed herein, so same or similar functional fundamentals and advantages as the ones described with reference to training methods may be attributed to such training computer programs.

In a yet further aspect, computing systems are provided for training a computing module implementing a Machine Learning model, said computing systems comprising a memory and a processor, embodying instructions stored in the memory and executable by the processor, and the instructions comprising functionality or functionalities to execute methods of training a computing module implementing a Machine Learning model, such as those described in other parts of the disclosure. Such computing systems (also denominated training computing systems herein) are suitable or configured to perform training methods described herein, so same or similar functional principles and advantages as the ones described with reference to training methods may be attributed to such training computing systems.

### BRIEF DESCRIPTION OF THE DRAWINGS

Non-limiting examples of the disclosure will be described in the following, with reference to the appended drawings, in which:
Figure 1 is a schematic illustration of computer-based multi-dimensional tree-structures suitable for training methods and systems according to examples.
Figure 2 is a block diagram schematically illustrating systems for training a computing module implementing a Machine Learning model according to examples.
Figure 3 is a flow chart schematically illustrating methods of training a computing module implementing a Machine Learning model according to examples.

### DETAILED DESCRIPTION OF EXAMPLES

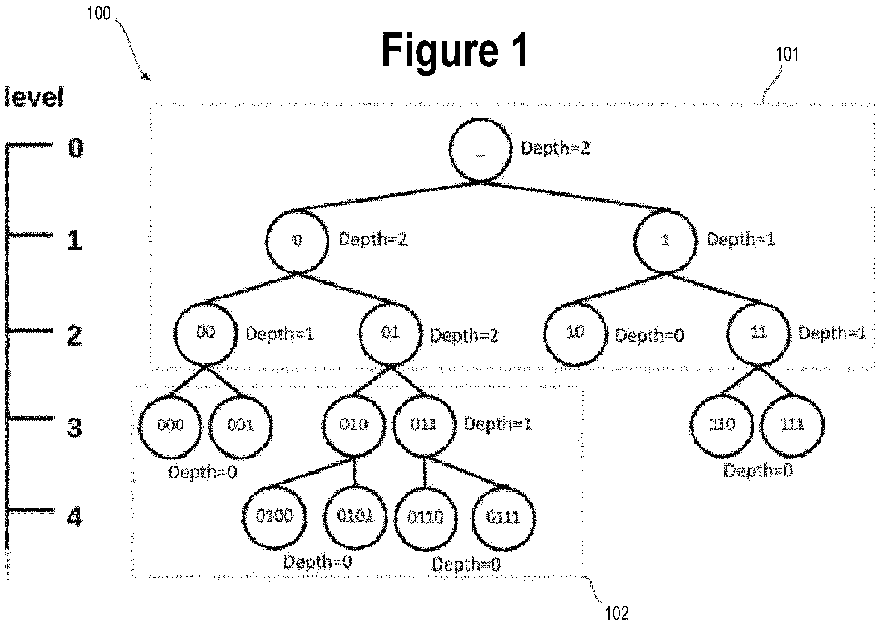

Figure 1 is a schematic illustration of computer-based multi-dimensional tree-structures suitable for training methods and systems according to examples. As shown in the figure, such computer-based multi-dimensional tree-structures may comprise a plurality of computing-nodes (circles labelled with `_' to '0111') including a root computing-node (circle labelled with '_'), a plurality of non-root computing-nodes (remaining circles labelled with '0' to `0111') and parent-child relations between the computing-nodes. For example, root computing-node `_' has two children nodes '0' and '1', computing-node '0' has two children nodes '00' and '01', computing-node '1' has two children nodes `10' and `11', computing-node '00' has two children nodes '000' and '001', etc.

The root computing-node '_' may cover a multi- or D-dimensional space (or domain) having a plurality of dimensions. Each of the non-root computing-nodes '0' - '0111' may cover a part of the multi- or D-dimensional space (or domain) such that each of the non-root computing-nodes with same parent computing-node covers a partition of whole or part of the multi- or D-dimensional space covered by said parent computing-node. Such domain partitions may be disjoint or (slightly) overlapping partitions. For the sake of simplicity, the particular computer-based multi-dimensional tree-structure shown is based on one-to-two parent-children relations, i.e., corresponding to a one-dimensional space: 2° = 2¹ = 2 children per parent. A tree-structure aimed at representing a 3D (three-dimensional) space, would be based on one-to-eight parent-children relations: 2° = 2³ = 8 children per parent.

Each of the computing-nodes may store one or more data-elements (e.g., data records, rows, data arrays, data sets, etc.) each having a (space-)coordinate for each of the dimensions defining where the data-element is located within the whole or part of the multi- or D-dimensional space covered by the computing-node (or domain of the computing-node) in which the data-element is stored. The (space-)coordinates of a data-element may correspond to, e.g., spatial coordinates of a key value, unique identifier, or any combination of attributes of the data-element designating or pointing to a particular location in the multi- or D-dimensional space characterizing or identifying the data-element within the multi- or D-dimensional space. In some examples, a z-order function may be defined to produce a z-order identifier (e.g., a sequence of 0 and 1) depending on the (space-)coordinates of the data-element. The z-order based identifier may correspond to an either unique or non-unique identifier of the data-element. Z-order identifiers may also be defined to identify computing-nodes and corresponding domain covered by the computing-node. Any data-element may be stored in any of the computing-nodes whose z-order identifier matches a sub-sequence of leftmost bit(s) of the z-order identifier of the data-element. Taking into account the particular example shown, a data-element with z-order identifier '**0111**0101001...' may be stored in one or more of the computing-nodes with following z-order identifiers: **'0', '01', 011'** and ° **0111'.**

The whole or part of the multi- or D-dimensional space covered by a computing-node may also be denominated as the domain of the computing-node. In a parent-children relation, the domain of the parent computing-node may be equal to the union of the (disjoint or - slightly- overlapping) domains of the children computing-nodes. In other words, the domains of the children computing-nodes may be either non-intersecting or (slightly) intersecting domains whose union coincides with the domain of the parent computing-node.

Computer-based multi-dimensional tree-structures according to Figure 1 may be comprised in either a single computing system or a distributed system or network of computing systems, wherein each of the computing-nodes `_' - '0111' may be stored at one of the computing systems in the network or distributed system, optionally along with an in-memory map structurally describing the (whole) multi-dimensional tree-structure.

Computer-based multi-dimensional tree-structures according to present disclosure may include different levels of computing-nodes: tree-level 0 to tree-level 4... Such tree-structures may, e.g., be based on parent-children relations wherein each of the computing-nodes has either zero children or 2° children (i.e., 2¹ children in the particular example shown). Taking this into account, each of the computing-nodes having 2° children may be seen as a root of a perfect 2^{D}-ary tree with two or more tree-levels. For example, the nodes with identifiers `_', '0', '1', '00', '01', '10' and `11' form a perfect 2-ary tree 201 with three tree-levels (levels 0, 1 and 2) and the computing-node `_' as root computing-node. Another example may be the sub-tree formed by the nodes with identifiers '01', `010', '011', `0100', '0101', `0110' and `0111', which has three tree-levels (levels 2, 3 and 4) and the node '01' as root computing-node of a perfect 2-ary tree.

In the aforementioned z-order based approach, the parent-children relations may be identified by the z-order identifiers attributed to the computing-nodes. For example, any child computing-node may have an identifier equal the identifier of its parent computing-node concatenated with D bit(s) at the right of the identifier of its parent computing-node, D being the number of dimensions of the multi- or D-dimensional space. In the particular example shown in Figure 1, the right D bit(s) is only one bit because it is a 2-ary tree-structure (2° = 2¹ = 2-ary tree). In a 4-ary tree-structure, the right D bit(s) would be 2 bits (2° = 2² = 4-ary tree); in an 8-ary tree-structure, the right D bit(s) would be 3 bits (2° = 2³ = 8-ary tree); etc.

Each of the computing-nodes that are root of a perfect 2^{D}-ary (sub-) tree may have an associated Depth of the perfect 2^{D}-ary (sub-) tree. For instance, the node '_' is shown having a Depth of 2 which is indicated in the figure with 'Depth = 2' and means that the node '_' has two levels of "descendant" nodes forming the perfect 2-ary (sub-) tree 201. A computing-node with Depth equal to zero may indicate that the computing-node has no children. A computing-node with Depth greater than zero may indicate that the computing-node has children computing-nodes. Depth may thus be used to know whether the computing-node has either children or no children.

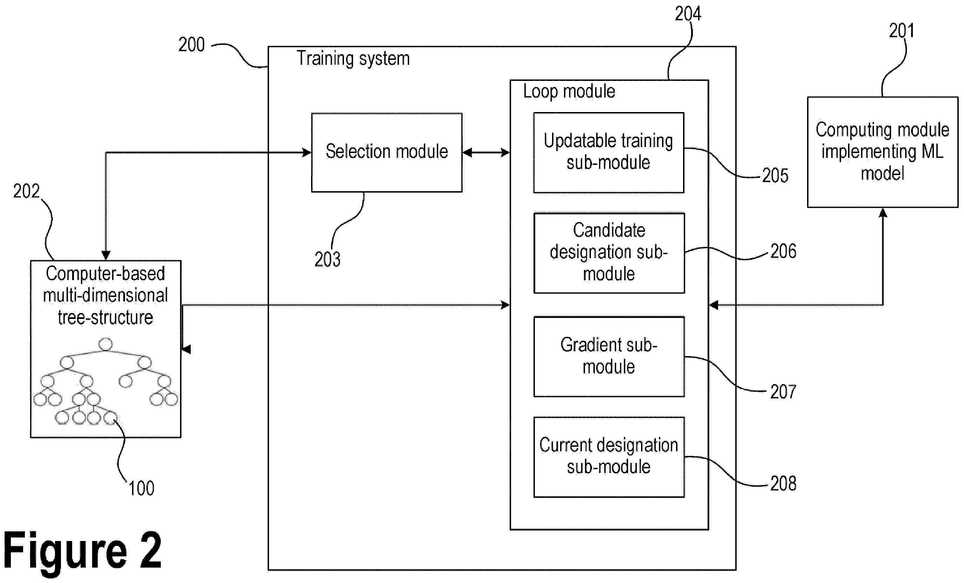

Figure 2 is a block diagram schematically illustrating systems 200 for training a computing module 201 implementing a ML model according to examples. As generally shown in the figure, training systems 200 may include a selection module 203 and a loop module 204. The loop module 204 may comprise a training sub-module 205, a candidate designation sub-module 206, a gradient sub-module 207 and a main designation sub-module 208. Since training systems 200 may use computer-based multi-dimensional tree-structures 202 such as the ones 100 of Figure 1, number references from Figure 1 may be reused in following description of Figure 2.

Selection module 203 may be configured to select one of the computing-nodes (in the computer-based multi-dimensional tree-structure 202, 100) as starting point and to initially designate it as (unique) main computing-node. Loop module 204 may be configured to perform an iteration loop until an ending condition is satisfied, each of the iterations including functionality or functionalities implemented by sub-modules 205 - 208 included in the loop module 204. Training sub-module 205 may be configured to perform training function of training the computing module 201 with update of the ML model using the coordinates of a first selection of data-elements in the (unique) main computing-node in current iteration (of the iteration loop). Candidate designation sub-module 206 may be configured to perform candidate designation function of designating candidate computing-nodes based on a candidate-designation policy. Said policy may include designating as candidates those computing-nodes having parent-child relation with the main computing-node in current iteration (of the iteration loop).

Gradient sub-module 207 may be configured to perform gradient function of calculating (or estimating), for each of the computing-nodes previously designated as candidates in current iteration (of the iteration loop), a gradient denoting a measure of loss of the ML model depending on the coordinates of a second selection of data-elements in the candidate. Main designation sub-module 208 may be configured to perform main designation function of designating as (new unique) main computing-node one of the candidate computing-nodes depending on the gradients (or gradient magnitudes or modules or norms) previously calculated in current iteration (of the iteration loop) at gradient sub-module 207, in order to initiate next iteration (of the iteration loop) with said newly designated main computing-node. This (new unique) main computing-node to be processed in next iteration (of the iteration loop) substitutes the (previous unique) main computing-node that has been processed at present iteration which is close to terminate.

Training systems 200 may be configured to perform a gradient descent (GD) algorithm, which may in particular be a stochastic gradient descent (SGD) algorithm, that may implement the calculation of the gradient (at, e.g., gradient sub-module 207) taking into account only those computing-nodes that have been previously designated (at, e.g., candidate designation sub-module 206) as candidates in current iteration (of the iteration loop). Any known GD or SGD approach or implementation may be used for said aim in training methods according to present disclosure, including variants such as, e.g., Adagrad, Adadelta, RMSprop, Nadam, momentum methods, etc.

The ending (or terminating or stopping) condition may be satisfied when at least one of a variety of ending situations occurs. One of these ending (or terminating or stopping) situations may correspond to when a loss (or training loss) resulting from the training with update of the ML model performed so far (at, e.g., training sub-module 205 along performed iterations) is below a predefined loss threshold. A further ending situation may correspond to when a testing loss or testing error is below a predefined testing threshold. Throughout the present disclosure, the term "loss" refers to "training loss" unless explicitly stated otherwise. Other ending situations may correspond to when user request to terminate the training method is received, or when leaf tree-level has been reached, or when predefined number of iterations (of the iterative loop) has been reached, or when predefined number of main computing-nodes has been processed, or when predefined processing time has been reached, etc.

The root computing-node may be selected as starting point and, therefore, initially designated as main computing-node (at, e.g., selection module 203) just before starting to perform the iteration loop (at, e.g. loop module 204). All or part of the computing-nodes in the computer-based multi-dimensional tree-structure 202 may each store a representative sample of the data-elements within the whole or part of the multi-dimensional space covered by the computing-node. This selective storing (of representative data-elements) may be defined depending on the training to be performed. For example, if the training aims at detecting certain features/coordinates in data-elements or at classifying data-elements depending on certain features/coordinates thereof, only data-elements having (significantly) different combinations of said features/coordinates may be stored in the computing-node. This may be performed based on, e.g., clustering techniques in such a way that a predefined (small) number of data-elements in each of the resulting clusters may be stored in the computing-node. This may permit avoiding repetitions or concentrations of similar data-elements that contribute nothing or very little to make the ML model to learn or, in other words, to converge towards target or desired learning state.

Training of the computing module 201 with update of the ML model may be performed (at, e.g., training sub-module 205) based on performing the first selection of data-elements randomly and/or by selecting (only) a first predefined percentage of data-elements stored in the main computing-node. This first predefined percentage may be equal to 100% or, in other words, all the data-elements stored in the main computing-node may be included in the first selection. Criteria to delimit such a first selection of data-elements may be defined depending on, e.g., the type of training to be carried out. This may be performed experimentally depending on, e.g., results of training(s) previously performed by training system(s) 200. If the training to be performed is similar to or partially coincident with already performed training(s), conclusions on best quantities (or percentages or proportions) of data-elements to be included in first selection may be inferred therefrom.

Designation of candidates may be performed (at, e.g., candidate designation sub-module 206) based on candidate-designation policy that may be limited to computing-nodes that are children of the main computing-node in current iteration (of the iteration loop); i.e., all or part of the children of the main computing-node may be designated as candidates. Such a selection of not all the children nodes may be randomly performed. Additionally or alternatively, candidate-designation policy may include further designating as candidates those computing-nodes that have been designated as candidates in previous iteration or iterations (of the iteration loop). Said previous iterations may be limited to a predefined number of previously executed iterations (of the iterative loop). Additionally or alternatively, candidate-designation policy may include further designating as candidates those computing-nodes that have been previously designated as main computing-nodes in previous iteration or iterations (of the iteration loop). Said previous iterations may be limited to a predefined number of previously executed iterations (of the iterative loop). Additionally or alternatively, candidate-designation policy may be restricted to designate as candidates only computing-nodes at one tree-level above or below, or at same tree-level of, the main computing-node in current iteration. Additionally or alternatively, candidate-designation policy may be restricted to a predefined maximum number of designated candidates, either in current iteration or so far throughout all performed iterations.

Candidate-designation policy may thus include any possible combination of the aforementioned criteria to designate candidates:
(a) Computing-nodes that are children of the main computing-node in current iteration; e.g., all or part of the children; e.g., random selection if part of the children;
(b) Computing-nodes that have been designated as candidates in (all or limited number of) previous iterations;
(c) Computing-nodes that have been designated as main computing-node in (all or limited number of) previous iterations;
(d) Computing-nodes at one tree-level above or below, or at same tree-level of, the main computing-node;
(e) Restriction to predefined maximum number of designated candidates in either current iteration or so far.

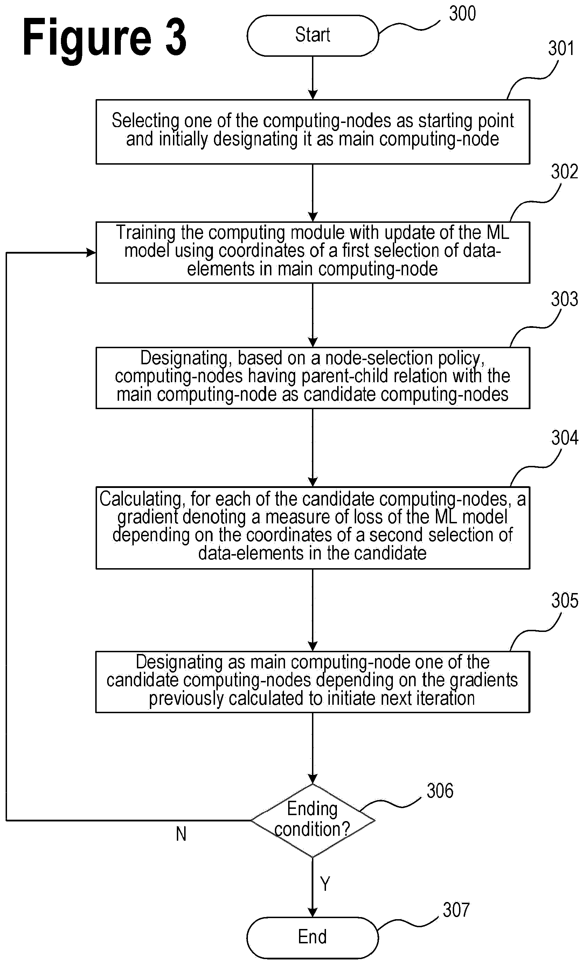

Figure 3 is a flow chart schematically illustrating methods of training a computing module 201 implementing a ML model according to examples. As generally shown in the figure, training methods may be initiated (e.g., at block 300) upon detection of a starting condition such as, e.g., a user request to start the training method. Since training methods according to Figure 3 may use computer-based multi-dimensional tree-structures according to, e.g., Figure 1 and are performable by training systems according to, e.g., Figure 2, number references from said Figures 1 and 2 may be reused in following description of Figure 3.

Training methods may further include (e.g., at method block 301) selecting one of the computing-nodes as starting point and initially designating it as main computing-node. This selecting functionality implemented or implementable at method block 301 may be performed by, e.g., selection module 203 previously described with reference to Figure 2. Functional details and considerations explained about said selection module 203 may thus be similarly attributed or attributable to method block 301.

Training methods may further include (e.g., at method blocks 302 - 306) performing an iteration loop until an ending condition is satisfied, each of the iterations including performance of functionalities described below with reference to method blocks 302 - 306. This looping functionality implemented or implementable at method blocks 302 - 306 may be performed by, e.g., loop module 204 (i.e., sub-modules 205 - 208) previously described with reference to Figure 2. Functional details and considerations explained about said loop module 204 may thus be similarly attributed or attributable to method blocks 302 - 306.

Iteration loop may include (e.g., at method block 302) training the computing module 201 with update of the ML model using the coordinates of a first selection of data-elements stored in the main computing-node in current iteration (of the iteration loop). This training functionality implemented or implementable at method block 302 may be performed by, e.g., training sub-module 205 previously described with reference to Figure 2. Functional details and considerations explained about said training sub-module 205 may thus be similarly attributed or attributable to method block 302.

Iteration loop may further include (e.g., at method block 303) designating candidate computing-nodes based on a candidate-designation policy, said policy including designating as candidates those computing-nodes parent-child related with the main computing-node in current iteration (of the iteration loop). This candidate designation functionality implemented or implementable at method block 303 may be performed by, e.g., candidate designation sub-module 206 previously described with reference to Figure 2. Functional details and considerations explained about said candidate designation sub-module 206 may thus be similarly attributed or attributable to method block 303. Iteration loop may yet further include (e.g., at method block 304) calculating (or estimating), for each of the computing-nodes previously designated as candidates in current iteration (of the iteration loop), a gradient (or gradient magnitude or module) denoting a measure of loss of the ML model depending on the coordinates of a second selection of data-elements in the candidate. This gradient calculation functionality implemented or implementable at method block 304 may be performed by, e.g., gradient sub-module 207 previously described with reference to Figure 2. Functional details and considerations explained about said gradient sub-module 207 may thus be similarly attributed or attributable to method block 304.

Iteration loop may furthermore include (e.g., at method block 305) designating as main computing-node one of the candidate computing-nodes depending on the gradients previously calculated in current iteration (of the iteration loop), so as to initiate next iteration with said newly designated main computing-node. This main designation functionality implemented or implementable at method block 305 may be performed by, e.g., main designation sub-module 208 previously described with reference to Figure 2. Functional details and considerations explained about said main designation sub-module 208 may thus be similarly attributed or attributable to method block 305.

Iteration loop may additionally include (e.g., at decision block 306) verifying whether an ending condition occurs or is satisfied. In case of positive or true result (Y) of said verification, training method may proceed to method block 307 to terminate execution of the training method. Otherwise (N), iteration loop may loop back to previous method block 302 to start new iteration of the iteration loop by training again the computing module 201 in updatable manner using first selection of data-elements in (new) main computing-node. Ending condition satisfaction may be determined by detecting, e.g., that loss resulting from the training with update of the ML model performed so far (throughout performed iterations) is below predefined loss threshold, that user request for ending the training method has been issued, that leaf tree-level has been reached, that predefined maximum number of iterations has been reached, that predefined maximum processing time has been reached, etc.

As used herein, the term "module" or "unit" may be understood to refer to software, firmware, hardware and/or various combinations thereof. It is noted that the modules are exemplary. The modules may be combined, integrated, separated, and/or duplicated to support various applications. Also, a function described herein as being performed by a particular module may be performed by one or more other modules and/or by one or more other devices instead of or in addition to the function performed by the described particular module.

The modules may be implemented across multiple devices, associated or linked to corresponding training systems proposed herein, and/or to other components that may be local or remote to one another. Additionally, the modules may be moved from one device and added to another device, and/or may be included in both devices, associated to corresponding training systems proposed herein. Any software implementations may be tangibly embodied in one or more storage media, such as, e.g., a memory device, a floppy disk, a compact disk (CD), a digital versatile disk (DVD), or other devices that may store computer code.

The training systems according to present disclosure may be implemented by computing means, electronic means or a combination thereof. The computing means may be a set of instructions (e.g., a computer program) and then training systems may comprise a memory and a processor, embodying said set of instructions stored in the memory and executable by the processor. These instructions may comprise functionality or functionalities to execute corresponding training methods such as, e.g., the ones described with reference to other figures.

In case the training systems are implemented only by electronic means, a controller of the system may be, for example, a CPLD (Complex Programmable Logic Device), an FPGA (Field Programmable Gate Array) or an ASIC (Application-Specific Integrated Circuit).

In case the training systems are a combination of electronic and computing means, the computing means may be a set of instructions (e.g., a computer program) and the electronic means may be any electronic circuit capable of implementing corresponding steps of training methods proposed herein, such as those described with reference to other figures.

The computer program(s) may be embodied on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing training methods according to present disclosure. The carrier may be any entity or device capable of carrying the computer program(s). For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program(s) is/are embodied in a signal that may be conveyed directly by a cable or other device or means, the carrier may be constituted by such cable or other device or means. Alternatively, the carrier may be an integrated circuit in which the computer program(s) is/are embedded, the integrated circuit being adapted for performing, or for use in the performance of, training methods proposed herein.

Although only a number of examples have been disclosed herein, other alternatives, modifications, uses and/or equivalents thereof are possible. Furthermore, all possible combinations of the described examples are also covered. Thus, the scope of the disclosure should not be limited by particular examples, but it should be determined only by a fair reading of the claims that follow.

## Claims

1. A method of training a computing module implementing a Machine Learning, ML, model, the training based on a computer-based multi-dimensional tree-structure comprising a plurality of computing-nodes including a root computing-node, a plurality of non-root computing-nodes and parent-child relations between the computing-nodes, wherein
the root computing-node covers a multi-dimensional space having a plurality of dimensions; wherein
each of the non-root computing-nodes covers a part of the multi-dimensional space in such a way that each of the non-root computing-nodes with same parent computing-node covers a partition of whole or part of the multi-dimensional space covered by said parent computing-node; and wherein
each of the computing-nodes stores data-elements each having a coordinate for each of the dimensions defining where the data-element is located within the whole or part of the multi-dimensional space covered by the computing-node in which the data-element is stored; and wherein the method comprises:
selecting one of the computing-nodes as starting point and initially designating it as main computing-node, and performing an iteration loop until an ending condition is satisfied, each of the iterations including:
training the computing module with update of the ML model using the coordinates of a first selection of data-elements stored in the main computing-node in current iteration;
designating candidate computing-nodes based on a candidate-designation policy, said policy including designating as candidates those computing-nodes parent-child related with the main computing-node in current iteration;
calculating, for each of the computing-nodes previously designated as candidates in current iteration, a gradient denoting a measure of loss of the ML model using the coordinates of a second selection of data-elements in the candidate; and
designating as main computing-node one of the candidate computing-nodes depending on the gradients previously calculated in current iteration, so as to initiate next iteration with said newly designated main computing-node.

2. A method of training a computing module according to claim 1, wherein the designation as main computing-node of one of the candidate computing-nodes depending on the gradients previously calculated includes
designating as main computing-node the candidate computing-node for which the gradient denoting highest loss of the ML model has been previously calculated in current iteration.

3. A method of training a computing module according to any of claims 1 or 2, wherein each of the iterations of the iteration loop further comprises
updating the ML model depending on the gradients previously calculated for each of the computing-nodes previously designated as candidates in current iteration.

4. A method of training a computing module according to any of claims 1 to 3, wherein the ending condition is satisfied when a loss of the ML model resulting from the training with update of the ML model performed so far is below a predefined loss threshold.

5. A method of training a computing module according to any of claims 1 to 4, wherein the selecting of one of the computing-nodes as starting point includes selecting the root computing-node as starting point.

6. A method of training a computing module according to any of claims 1 to 5, wherein each of the computing-nodes stores a representative sample of the data-elements within the whole or part of the multi-dimensional space covered by the computing-node.

7. A method of training a computing module according to any of claims 1 to 6, wherein the first selection of data-elements is a random selection of data-elements stored in the main computing-node, and/or a selection of a first predefined percentage of data-elements stored in the main computing-node, and/or a selection of all the data-elements stored in the main computing-node.

8. A method of training a computing module according to any of claims 1 to 7, wherein the second selection of data-elements is a random selection of data-elements stored in the candidate computing-node, and/or a selection of a second predefined percentage of data-elements stored in the candidate computing-node, and/or a selection of less than 50% of data-elements stored in the main computing-node, preferably less than 30%, and more preferably less than 10%.

9. A method of training a computing module according to any of claims 1 to 8, wherein the candidate-designation policy includes designating as candidates those computing-nodes that are children of the main computing-node in current iteration of the iteration loop.

10. A method of training a computing module according to any of claims 1 to 9, wherein the candidate-designation policy includes designating as candidates those computing-nodes that have been previously designated as candidates in previous iteration or iterations of the iteration loop, and/or those computing-nodes that have been previously designated as main computing-nodes in previous iteration or iterations of the iteration loop.

11. A method of training a computing module according to any of claims 1 to 10, wherein each of the computing-nodes is located at a tree-level in the multi-dimensional tree-structure, and the candidate-designation policy is restricted to designate as candidates only computing-nodes at one tree-level above or at one tree-level below or at same tree-level of the main computing-node.

12. A method of training a computing module according to any of claims 1 to 11, comprising performing a gradient descent algorithm including the calculation of the gradient only at those computing-nodes that have been previously designated as candidates in current iteration of the iteration loop.

13. A method of training a computing module according to claim 12, wherein the gradient descent algorithm is a stochastic gradient descent algorithm.

14. A computer program comprising program instructions for causing a computing system to perform a method according to any of claims 1 to 13 of training a computing module.

15. A system for training a computing module implementing a Machine Learning, ML, model, the training based on a computer-based multi-dimensional tree-structure comprising a plurality of computing-nodes including a root computing-node, a plurality of non-root computing-nodes and parent-child relations between the computing-nodes, wherein
the root computing-node covers a multi-dimensional space having a plurality of dimensions; wherein
each of the non-root computing-nodes covers a part of the multi-dimensional space in such a way that each of the non-root computing-nodes with same parent computing-node covers a partition of whole or part of the multi-dimensional space covered by said parent computing-node; and wherein
each of the computing-nodes stores data-elements each having a coordinate for each of the dimensions defining where the data-element is located within the whole or part of the multi-dimensional space covered by the computing-node in which the data-element is stored; and wherein the system comprises:
a selection module configured to select one of the computing-nodes as starting point and initially designating it as main computing-node, and
a loop module configured to perform an iteration loop until an ending condition is satisfied, each of the iterations including:
training the computing module with update of the ML model using the coordinates of a first selection of data-elements stored in the main computing-node in current iteration;
designating candidate computing-nodes based on a candidate-designation policy, said policy including designating as candidates those computing-nodes parent-child related with the main computing-node in current iteration;
calculating, for each of the computing-nodes previously designated as candidates in current iteration, a gradient denoting a measure of loss of the ML model using the coordinates of a second selection of data-elements in the candidate; and
designating as main computing-node one of the candidate computing-nodes depending on the gradients previously calculated in current iteration, so as to initiate next iteration with said newly designated main computing-node.
